# EUROPEAN PATENT APPLICATION

(11) **EP 4 539 223 A2**
(43) Date of publication of application: **16.04.2025**
(21) Application number: 24192845.6
(22) Date of filing: 05.08.2024
(51) Int. Cl.: H01M 50/207, H01M 50/224, H01M 50/227, H01M 50/24, H01M 50/247

(54) **BATTERY ASSEMBLY WITH METAL COATED POLYMER ENCLOSURE MEMBER**

(30) Priority: 11.10.2023 US 202363589554 P; 10.06.2024 US 202463658036 P; 16.07.2024 US 202463671918 P; 23.07.2024 US 202463674335 P; 30.07.2024 US 202418788255
(71) Applicant: Meta Platforms Technologies, LLC, Menlo Park, CA 94025 (US)
(72) Inventor: Yao, Zhicong, Menlo Park (US); Murphy, Luke, Menlo Park (US); Chen, Di, Menlo Park (US); Fang, Ran Oliver, Menlo Park (US); Chen, Baifeng, Menlo Park (US); Li, Su Wen, Menlo Park (US); Ma, Junfeng, Menlo Park (US); Wang, Yang, Menlo Park (US); Licht, Rachel Blackburn, Menlo Park (US); Wang, Wei, Menlo Park (US); Kadirvel, Karthik, Menlo Park (US)
(74) Representative: Murgitroyd & Company

(57) **Abstract**

A disclosed electronic device may include a battery and a battery enclosure member (100) securing the battery. The battery enclosure member may have a polymer base layer and a metal coating covering at least a portion of a surface of the polymer base layer. A method for manufacturing a battery enclosure member may include 1) providing a polymer base layer dimensioned to abut a battery in an electronic device, 2) etching a surface of a polymer base layer, and 3) depositing a metal coating over at least a portion of the surface of the polymer base layer. Various other methods, systems, and devices are also disclosed.

## Description

### TECHNICAL FIELD

The present disclosure is generally directed to battery assemblies having non-rectangular surfaces and profiles.

### BACKGROUND

Batteries are utilized in a wide variety of consumer devices, including portable and wearable products. Battery cases within or on the devices are commonly used to securely hold and protect the batteries as well as devices connected to the batteries and users of such devices. In order to protect the devices and users from harm, such battery cases are often designed to have a combination of high rigidity, high strength, and resistance to fire. Metals, such as steel and aluminum, are commonly chosen for conventional battery cases because they can be manufactured to meet each of these design requirements, and they typically have a high-quality surface finishes. In devices having weight constraints, lightweight metals, such as aluminum, may be chosen. Metal battery cases are commonly designed to hold batteries having relatively simple shapes, such as rectangular block shapes. Battery cases for such shapes may be readily manufactured by, for example, stamping to produce a thin, lightweight enclosure. However, more complex shapes may be difficult to manufacture without cracking and/or wrinkling, particularly when wall thicknesses are required to be thin to accommodate lower weight requirements. While certain materials, such as carbon fiber, may overcome some of the above-described problems, such materials may be prohibitively costly for use in a variety of electronics.

### SUMMARY

The present invention provides battery assembly, an electronic device and a method as defined in the appended claims.

In accordance with a first aspect, there is provided a battery assembly comprising a battery enclosure member dimensioned to secure a battery in an electronic device, the battery enclosure member comprising:
a polymer base layer and
a metal coating covering at least a portion of a surface of the polymer base layer.

The surface of the polymer base layer may comprise an etched surface.

The metal coating may comprise at least two metal layers.

A first metal layer of the at least two metal layers may comprise at least one of copper or nickel.

A second metal layer of the at least two metal layers may comprise an alloy.

The second metal layer may comprise at least one of a cobalt-phosphorous alloy or a nickel-cobalt alloy.

The polymer base layer may have a thickness of from approximately 100 µm to approximately 500 µm.

The metal coating may have a thickness of from approximately 2 µm to approximately 100 µm.

The polymer base layer may comprise a polymer formed from at least one of acrylonitrile, butadiene, or styrene.

The polymer base layer may further comprise at least one of polycarbonate and glass fiber.

The battery enclosure member may define a recess that is dimensioned to at least partially surround the battery.

The metal coating may be a first metal coating and the surface may be a first surface of the polymer base layer.

A second metal coating may cover at least a portion of a second surface of the polymer base layer that is disposed opposite the first surface.

The battery assembly may further comprise a battery positioned abutting the battery enclosure member.

The battery may be at least partially surrounded by the battery enclosure member.

The surface of the polymer base layer comprises one or more curved portions.

In accordance with a second aspect, there is provided an electronic device comprising a battery and a battery enclosure member securing the battery, the battery enclosure member comprising:
a polymer base layer; and
a metal coating covering at least a portion of a surface of the polymer base layer.

In accordance with a third aspect, there is provided a method comprising:
providing a polymer base layer dimensioned to abut a battery in an electronic device;
etching a surface of a polymer base layer; and
depositing a metal coating over at least a portion of the surface of the polymer base layer.

The method may further comprise molding the polymer base layer such that the surface of the polymer base layer comprises one or more curved portions.

Depositing the metal coating may comprise:
depositing a first metal layer over the etched surface of the polymer base layer; and
depositing a second metal layer over the first metal layer, the second metal layer comprising an alloy.

The second metal layer may comprise at least one of a cobalt-phosphorous alloy or a nickel-cobalt alloy.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1A is a perspective view of an exemplary battery enclosure member, according to some embodiments.
FIG. 1B is a side view of the battery enclosure member illustrated in FIG 1, according to some embodiments.
FIG. 2A is a top view of the battery enclosure member illustrated in FIG 1, according to some embodiments.
FIG. 2B is a perspective view of an exemplary battery assembly according to some embodiments.
FIG. 3 is a view of an exemplary substrate member supported on a metal plating fixture for manufacturing a battery enclosure member, according to some embodiments.
FIG. 4A is a top view of an exemplary temple for a head-mounted display device, according to some embodiments.
FIG. 4B is a side view of the temple illustrated in FIG 4A, according to some embodiments.
FIG. 5A is a graph showing flexural strength values for various materials, in accordance with some embodiments.
FIG. 5B is a graph showing Young's modulus values for the materials shown in FIG. 5A, in accordance with some embodiments.
FIG. 6A is a cross-sectional view of a portion of a polymer base layer, in accordance with some embodiments.
FIG. 6B is a cross-sectional view of the portion of the polymer base layer shown in FIG. 6A following etching, in accordance with some embodiments.
FIG. 6C is a cross-sectional view of the portion of the polymer base layer shown in FIG. 6B following electroless deposition, in accordance with some embodiments.
FIG. 7A is a cross-sectional view of the portion of the polymer base layer shown in FIG. 6C coated with a first metal layer, in accordance with some embodiments.
FIG. 7B is a cross-sectional view of the portion of the coated polymer base layer shown in FIG. 7A with a second metal layer disposed on the first metal layer, in accordance with some embodiments.
FIG. 8 is a cross-sectional view of the portion of the coated polymer base layer shown in FIG. 7B with a top-coat layer disposed on the second metal layer, in accordance with some embodiments.
FIG. 9 is a cross-sectional view of a portion of a polymer base layer with metal coatings disposed on two opposing surfaces, in accordance with some embodiments.
FIG. 10 is a flow diagram of an exemplary method for manufacturing a battery enclosure member, in accordance with some embodiments.
FIG. 11 is an illustration of exemplary augmented-reality glasses that may be used in connection with embodiments of this disclosure.
FIG. 12 is an illustration of an exemplary virtual-reality headset that may be used in connection with embodiments of this disclosure.

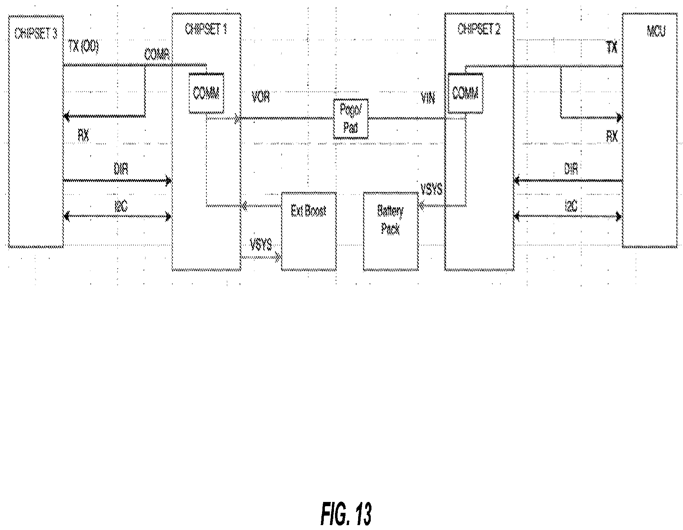

FIG. 13 is a block diagram showing a firmware control flow for managing headroom control, in accordance with some embodiments.

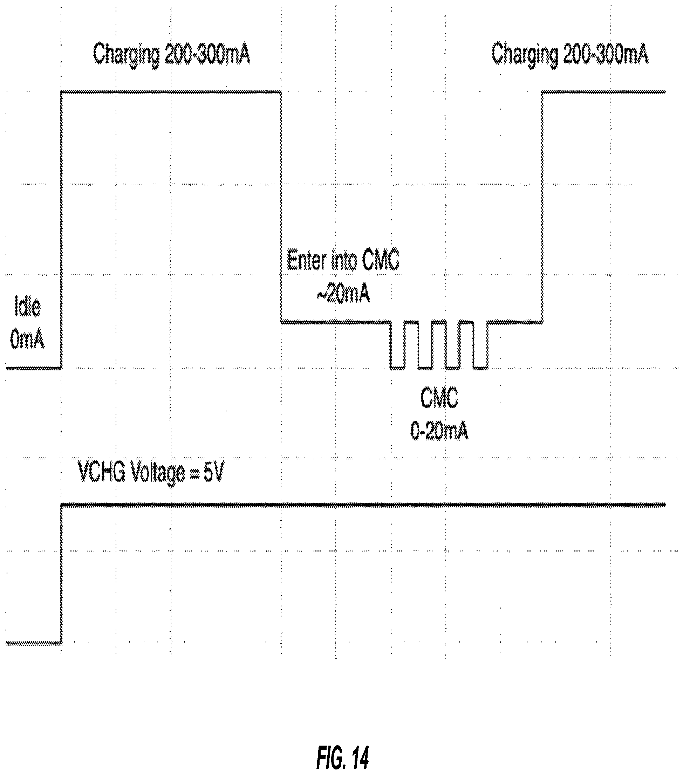

FIG. 14 is a flow diagram showing the firmware control flow for managing headroom control, in accordance with some embodiments.

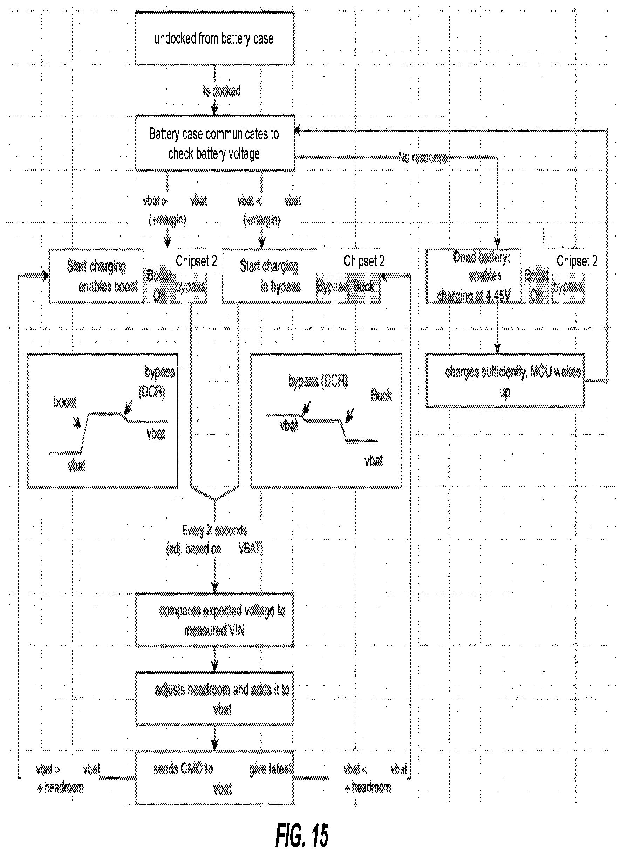

FIG. 15 is a block diagram showing firmware control flow for managing battery voltage over time, in accordance with some embodiments.

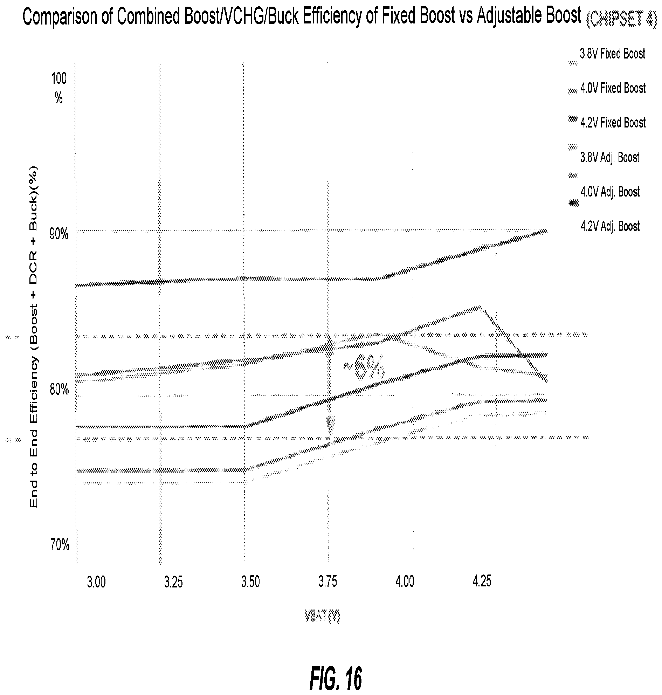

FIG. 16 is a graph showing fixed boost in comparison to adjusted boost of the battery voltage, in accordance with some embodiments.

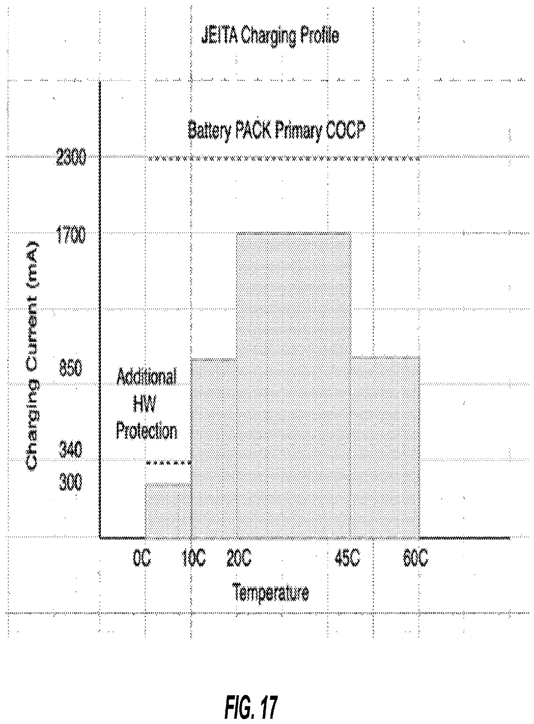

FIG. 17 is a graph showing a hardware protection layer, in accordance with some embodiments.

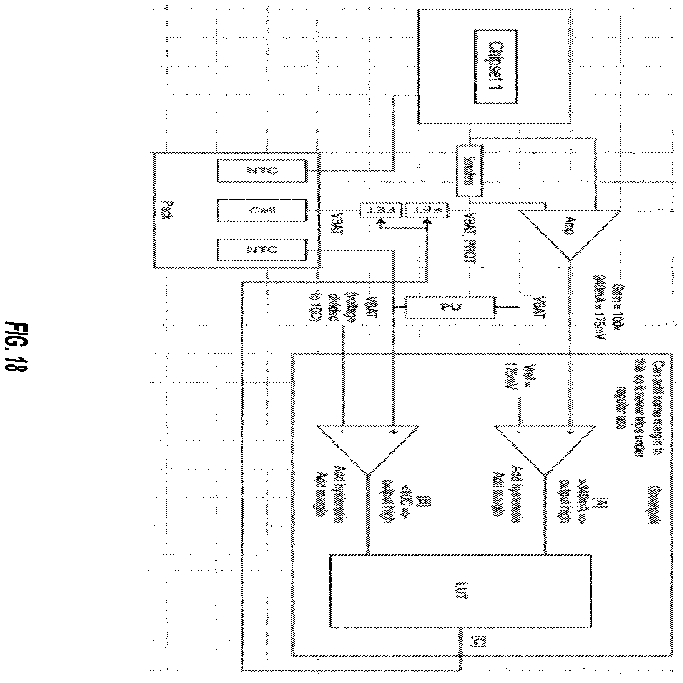

FIG. 18 is a block diagram showing an overcurrent protection circuit, in accordance with some embodiments.

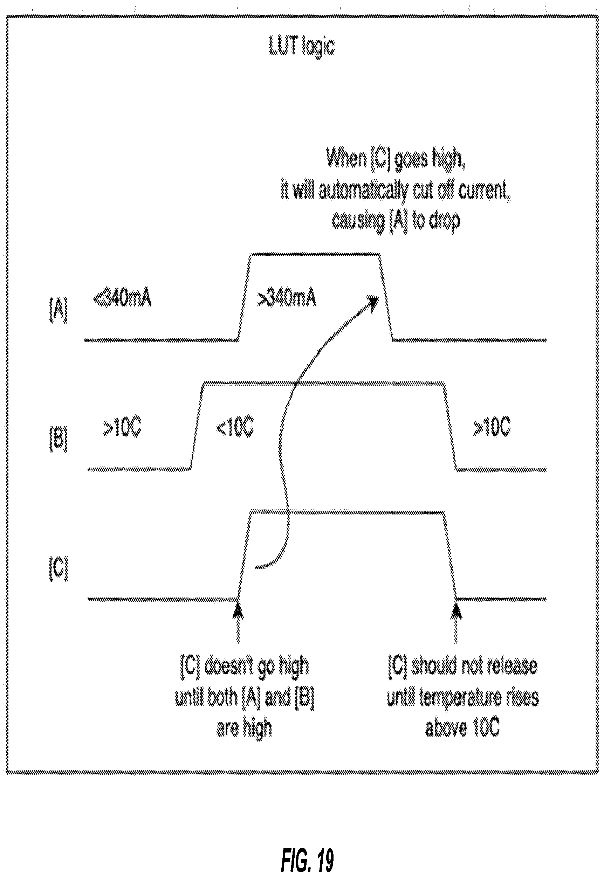

FIG. 19 is an illustration of an exemplary logic timing diagram, in accordance with some embodiments.

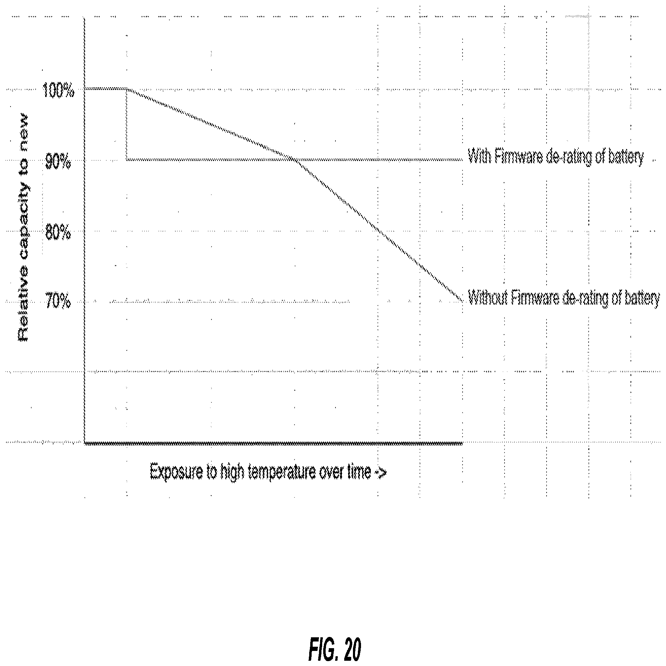

FIG. 20 is a graph showing relative capacity in comparison with exposure to high temperature over time, in accordance with some embodiments.

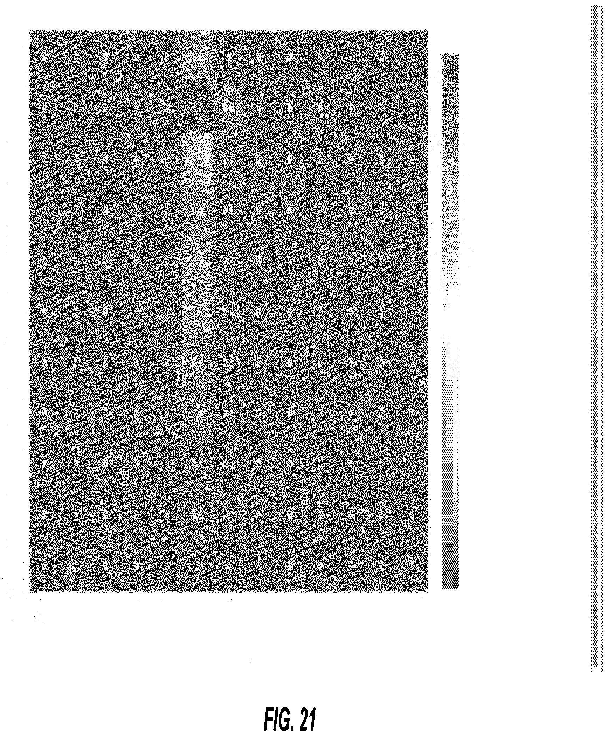

FIG. 21 is an illustration of an exemplary heat map, in accordance with some embodiments.

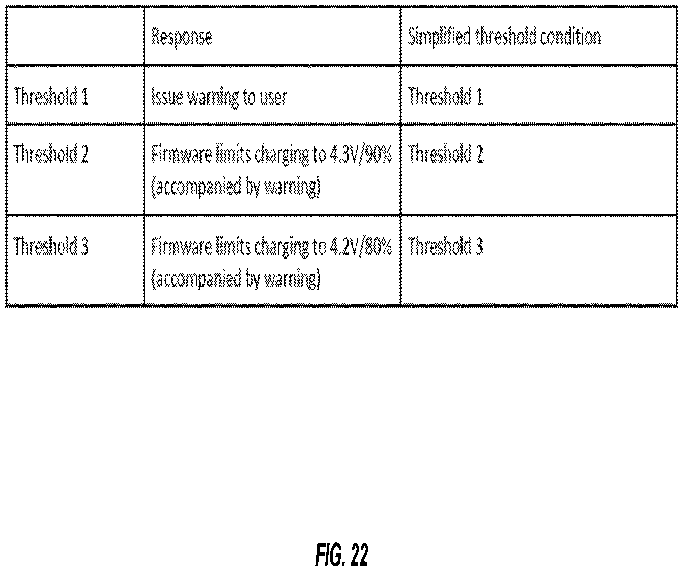

FIG. 22 is a graph showing a number of thresholds corresponding to different exposure levels, in accordance with some embodiments.

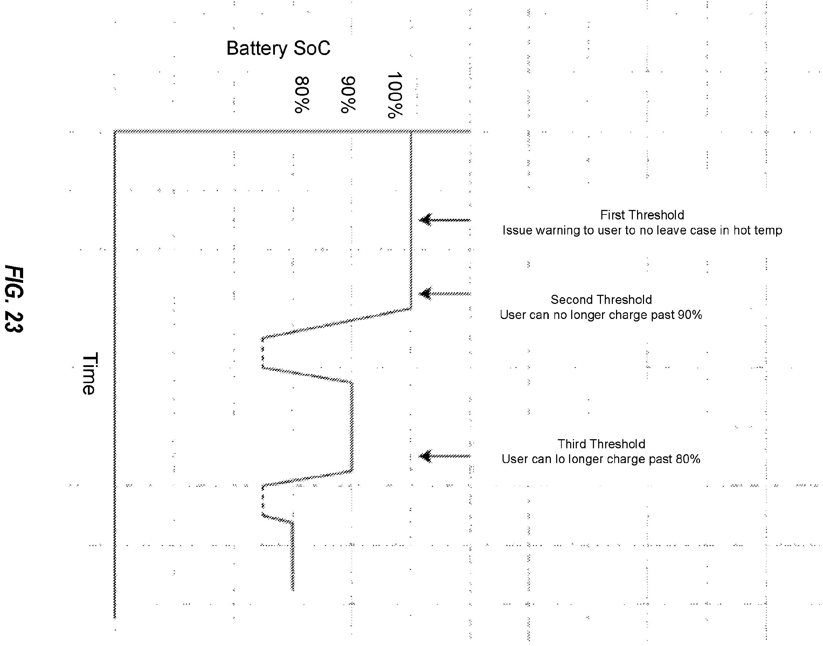

FIG. 23 is an illustration of an exemplary timing diagram, in accordance with some embodiments.

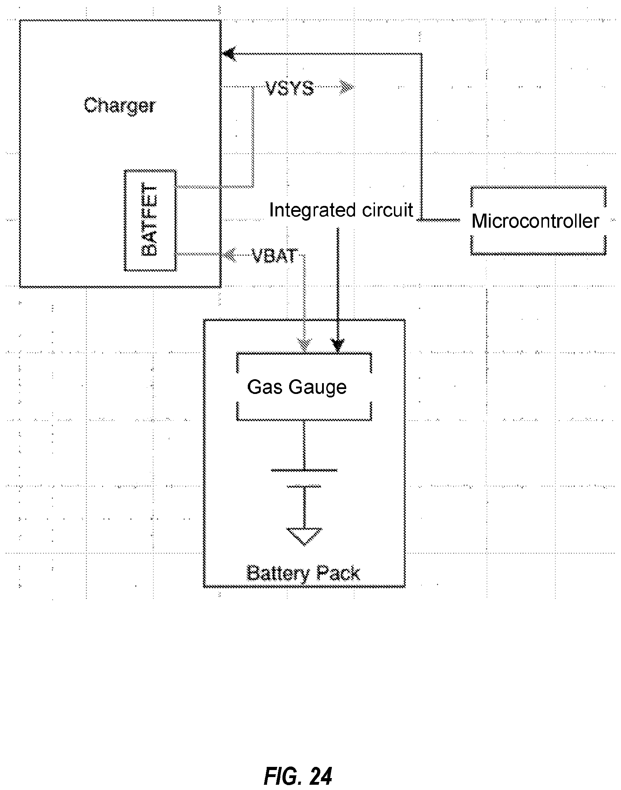

FIG. 24 is a block diagram showing electrical components inside a battery pack, in accordance with some embodiments.

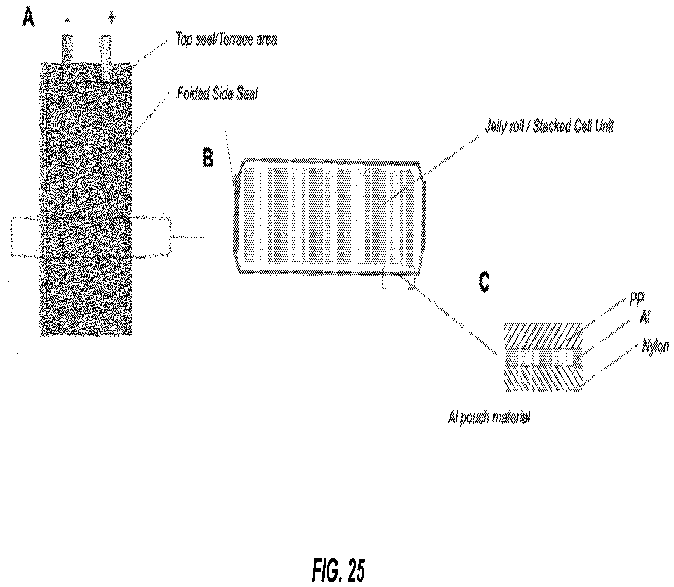

FIG. 25 is an illustration of an exemplary pouch cell battery, in accordance with some embodiments.

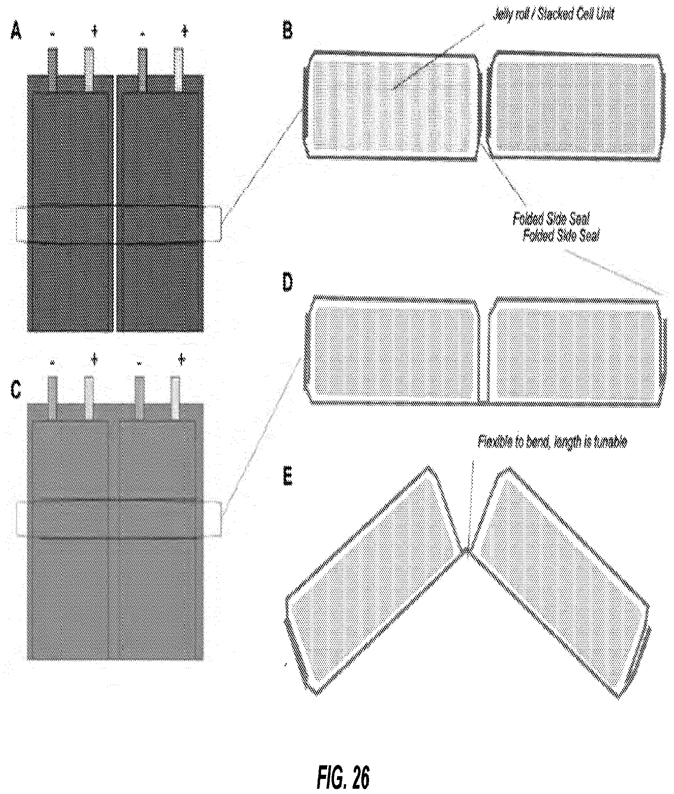

FIG. 26 is an illustration of an exemplary pouch cell battery with two or more battery cells, in accordance with some embodiments.

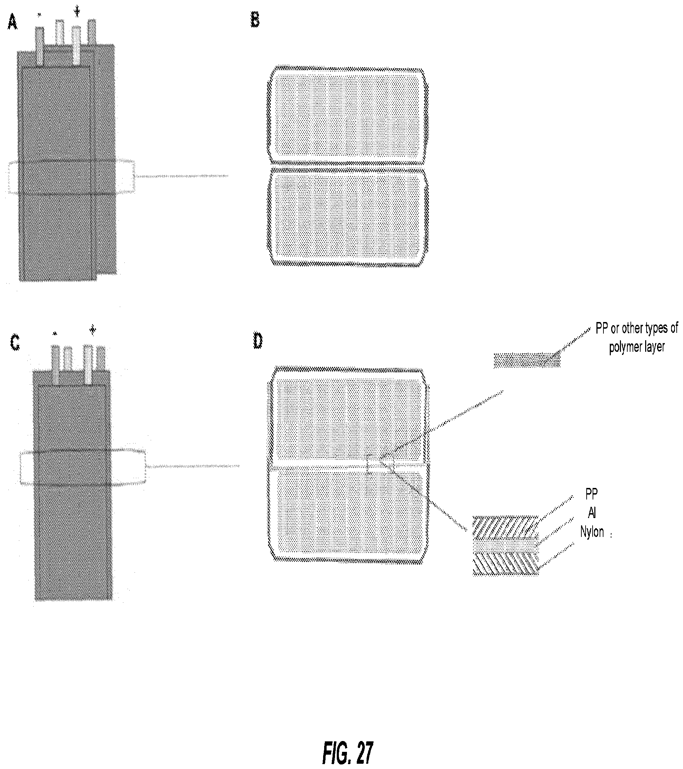

FIG. 27 is an illustration of an exemplary pouch cell battery with two or more stacked battery cells, in accordance with some embodiments.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

### BATTERY ASSEMBLY WITH METAL COATED POLYMER ENCLOSURE MEMBER

The present disclosure is generally directed to battery assemblies having non-rectangular surfaces and profiles. Enclosures for the disclosed battery assemblies may be formed of a molded polymer material plated with one or more thin metal layers. The combination of polymer and metal materials may provide strong enclosures that are relatively lightweight and thin while also having a high flexural modulus and Young's modulus. Additionally, the described enclosures may be resistant to fire and may have a visually appealing metallic surface finish. The polymer and metal materials may be much lower in cost than other strong, lightweight materials, such as carbon fiber layers. As described herein, the enclosures may be molded into shapes that are substantially more complex than conventional battery enclosures. Accordingly, such enclosures may have various curved surfaces with non-rectangular surface profiles.

Features from any of the embodiments described herein may be used in combination with one another in accordance with the general principles described herein. These and other embodiments, features, and advantages will be more fully understood upon reading the following detailed description in conjunction with the accompanying drawings and claims.

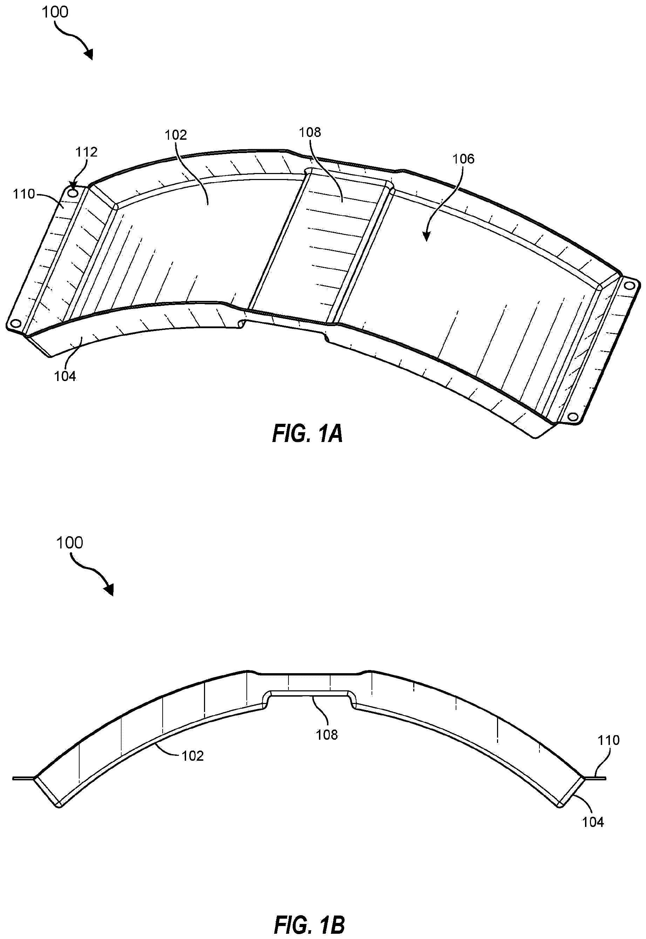

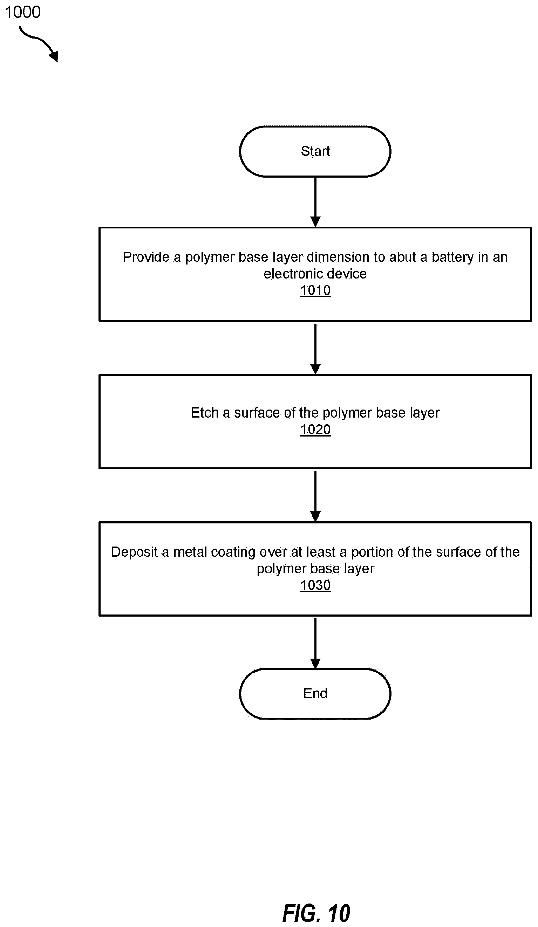

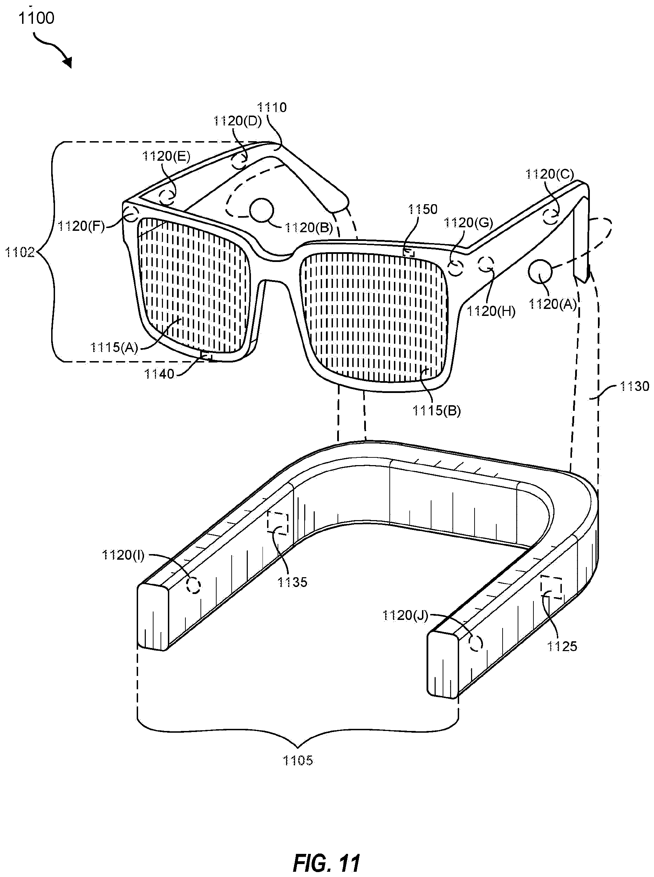

The following will provide, with reference to FIGS. 1-9, detailed descriptions of exemplary systems and devices that include battery assemblies. The discussion corresponding to FIG. 10 will provide examples of methods for manufacturing the systems and devices presented herein. The descriptions corresponding to FIGS. 11-12 will provide examples of various systems and devices implementing embodiments presented herein.

FIGS. 1A-2A show an exemplary battery enclosure member 100 that is dimensioned to secure a battery in an electronic device. Battery enclosure member 100 may be configured to at least partially surround a battery having a non-rectangular and/or otherwise unconventional shape. For example, battery enclosure member 100 may include one or more curved base walls 102 that each have a curved surface shape configured to abut a curved battery surface. The exterior contours of battery enclosure member 100 may enable it to fit within and conform to various electronic devices. For example, in some embodiments, battery enclosure member 100 may secure a battery within a curved battery-pack accessory for a head-mounted display device. In at least one example, such a curved battery-pack accessory may be curved so as to closely surround a user's head when the head-mounted display device is worn. The curved battery-pack accessory may be located on any suitable portion of a head-mounted display system. For example, a curved battery-pack accessory may be disposed on a head strap assembly that securely holds the head-mounted display device on a user's head when worn such that the battery-pack assembly abuts a rear portion of the user's head.

Battery enclosure member 100 may also include side walls 104 extending from peripheral regions of curved base walls 102 such that curved base walls 102 and side walls 104 together define one or more battery recesses 106. Side walls 104 may have any suitable shape and orientation. For example, exposed edges of side walls 104 may generally or substantially follow a path parallel to surface and/or edge portions of curved base walls 102 such that side walls 104 have a generally or substantially consistent width around battery recesses 106. In certain examples, side walls 104 may extend from curved base walls 102 at different angles. For example, side walls 104 may extend in generally normal directions from abutting surface regions of curved base walls 102 such that side walls 104 or oriented differently due to surface curvatures of curved base walls 102.

In various examples, battery recesses 106 may be configured to at least partially surround bottom and side surfaces of one or more batteries disposed within battery enclosure member 100. In some examples, battery enclosure member 100 may include an intermediate region 108 disposed between a pair of battery recesses 106. Each battery recess 106 may at least partially surround a separate battery and/or a separate portion of a battery. Intermediate region 108 may protrude from curved base walls 102 so as to separate adjacent battery recesses 106. In some examples, intermediate region 108 may provide structural support for electronic components, such as circuit boards and/or cables, coupled to batteries disposed within battery recesses 106.

In various embodiments, battery enclosure member 100 may also include at least one mounting extension 110 protruding from an outer portion of a side wall 104. For example, as shown in FIGS. 1A and 1B, battery enclosure member 100 may include two mounting extensions 110 extending from opposite end regions of battery enclosure member 100. One or more mounting holes 112 may be defined in each mounting extension 110. Mounting holes 112 may be used as racking points to securely hold battery enclosure member 100 in a desired position during processing. For example, fasteners may be attached to mounting extension 110 via mounting holes 112 to securely fasten battery enclosure member 100 to a suitable holding rack during a metal coating process. Additionally, or alternatively, mounting extension 110 and/or mounting holes 112 may be utilized to fasten battery enclosure member 100 to a display device assembly, such as a head strap assembly, in some examples.

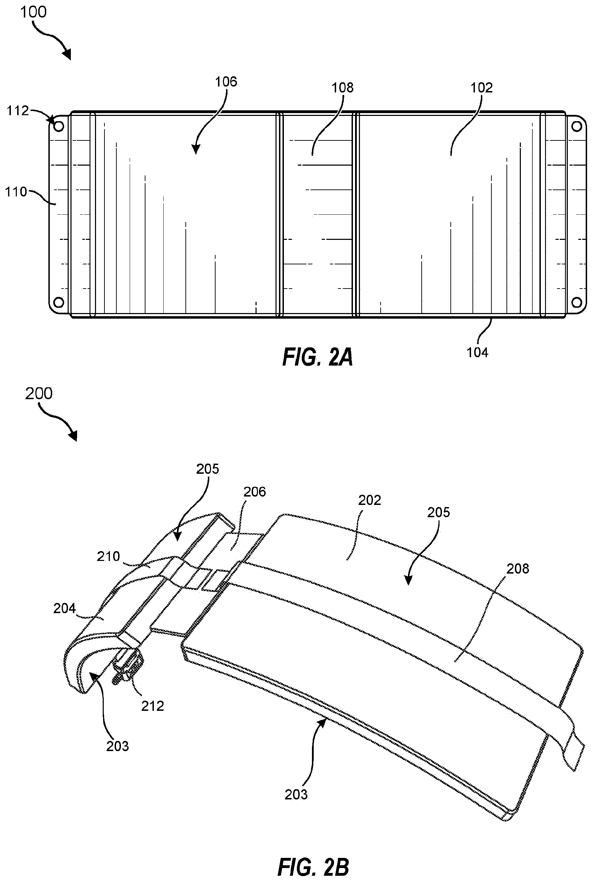

FIG. 2B illustrates an exemplary curved battery assembly 200. In some examples, battery assembly 200 may include a pair of curved batteries 202, a printed circuit board 206, ribbon cables 210, and at least one connector 212. In alternative embodiments, battery assembly 200 may include a single curved battery or more than two curved batteries. In some embodiments, battery assembly 200 may provide primary or auxiliary power to an electronic device, such as a head-mounted display device. In some embodiments, battery assembly 200 may receive and power via one connector (e.g., connector 212) and transmit power via another. In other embodiments, battery assembly 200 may receive and transmit power via a single connector. In some embodiments, battery assembly 200 may act as a power conduit that relays power to a connected device. In some embodiments, printed circuit board 206 may include circuitry configured to charge curved batteries 202 and/or relay power from batteries 202 and 204 to a connected head-mounted display system. In some embodiments, printed circuit board 206 may represent a protection control module or a protection circuit module.

As shown, curved batteries 202 may have curved inner surfaces 203 and outer surfaces 205. In at least one embodiment, the curved inner surfaces 203 and outer surfaces 205 of each of batteries 202 and 204 may be substantially parallel to each other. In some examples, curved inner surfaces 203 and/or curved outer surfaces 205 of batteries 202 may conform to a curve having a uniform or constant radius of curvature. Additionally, or alternatively, one or more of curved inner surfaces 203 and/or curved outer surfaces 205 may conform to a curve having a non-uniform or varying radius of curvature. In some embodiments, inner and outer curved surfaces 203 and 205 may have radii of curvature in the range of 90mm-120mm (e.g., 95mm or 110mm. In some embodiments, inner and/or outer curved surfaces 203 and 205 may be spline surfaces. In some examples, the term "spline surface" may refer to any curved surface that may be modeled or represented using one or more spline curves. In some examples, the term "spline curve" may refer to an approximating curve that passes near one or more control points. Additionally, or alternatively, the term "spline curve" may refer to an interpolating curve that passes through one or more control points. In some examples, the term "spline curve" may refer to a complex or piecewise polynomial curve constructed from two or more curve segments.

Curved battery assembly 200 may have any suitable length, width, or thickness and/or may be optimized for a specific use case of curved battery assembly 200. In some embodiments, curved battery assembly 200 may have a length 116 in the range of 60mm-100mm or in the range of 70mm-80mm, a width 118 in the range of 35mm-45mm, and a thickness in the range of 4-7mm. In some examples, curved battery assembly 200 may be a curved lithium-ion cell.

In some embodiments, curved battery assembly 200 may be constructed to have a rigid and/or substantially rigid structure. Alternatively, curved battery assembly 200 may be constructed to have a flexible and/or substantially flexible structure. In some embodiments, multiple rigid curved cells may be combined to give a curved battery a flexible and/or substantially flexible structure. In some embodiments, multiple rigid curved cells may be connected by a flexible connector (e.g., a hinging connector). By having a non-uniform curvature, curved battery assembly 200 may better conform to a user's body. In some embodiments curved battery assembly 200 may have a conformal structure that matches or approximates the shape of one or more users' heads (e.g., foreheads, backs of heads, etc.).

According to various embodiments, battery enclosure member 100 may at partially surround and house curved battery assembly 200. Battery enclosure member 100 may be dimensioned and have sufficient rigidity and strength to securely hold components of curved battery assembly 200. For example, curved base walls 102 of battery enclosure member 100 may be shaped and configured to abut outer surfaces 205 of curved batteries 202 and 204. Side walls 104 of battery enclosure member 100 may be shaped and configured to abut and a least partially surround side regions of curved battery assembly 200, including corresponding side surfaces of curved batteries 202 and 204. Intermediate region 108 may protrude a distance from battery recesses 106 to provide a surface that abuts and secures a portion of curved battery assembly 200, such as printed circuit board 206.

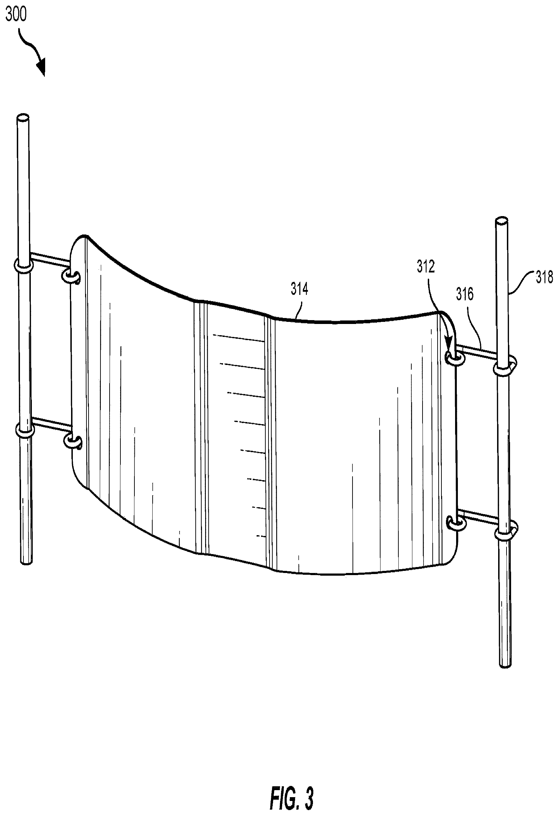

FIG. 3 illustrates a system 300 for processing a substrate member to produce a battery enclosure member, according to some embodiments. As shown in this figure, a substrate member 314 may serve as a base member (i.e., a substrate member) that may be plated or coated with a material, such as one or more metal or other suitable material layers, to form a battery enclosure member, such as battery enclosure member 100 illustrated in FIGS. 1A-2A. As shown, substrate member 314 may be formed to a selected shape, such as a shape conforming to that of battery enclosure member 100, prior to processing. In at least one example, substrate member 314 may be a plastic member that has been molded to the specified shape.

Substrate member 314 may be secured, for example, to a fixture 318 during processing. Racking members 316 may be fastened to substrate member 314 and racking members 316 to hold substrate member 314 during processing. For example, racking members 316 may be coupled to substrate member 314 via mounting holes 312, which may be located at peripheral regions of substrate member 314. Once mounted to fixture 318, substrate member 314 may be processed in any suitable manner. For example, as described in greater detail below, substrate member 314 may be etched and plated with one or more metal layers. In at least one example, following an etching process, substrate member 314 may be subjected to an electroplating process to deposit one or more layers of at least one metal material onto surfaces of substrate member 314. In some examples, fixture 318 and racking members 316 may be electrically conductive to provide an electrical charge to portions of substrate member 314 and/or one or more layers deposited on substrate member 314 for purposes of electroplating.

In some examples, substrate member 314 may be secured to fixture 318 so as to prevent warping and/or other deformation during processing. For example, sufficient tension may be applied to substrate member 314 via, for example, mounting holes 312 to prevent deformation of substrate member 314. Additionally, or alternatively, supports and/or additional connection points may be used to maintain substrate member 314 in a desired shape and configuration during processing. According to some examples, fixture 318 and/or additional portions of system 300 may be configured to divert electrical current at portions of substrate member 314, such as sharp edges and/or angular regions, to prevent excess deposition and/or buildup of metal material at such regions during a deposition process, such as an electroplating process.

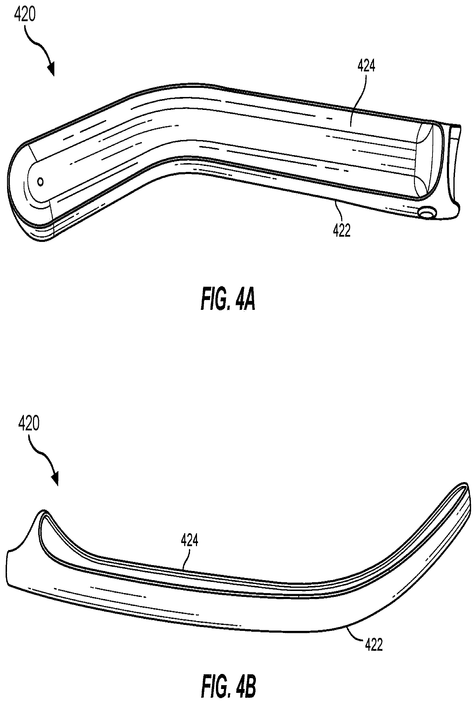

FIGS. 4A and 4B illustrate an exemplary temple arm 420 for a head-mounted device, such as a pair of augmented-reality glasses. Temple arm 420 may include a battery that is secured within temple arm 420 by a battery enclosure member 424. As shown in FIGS. 4A and 4B, battery enclosure member 424 may be coupled to a housing 422 of temple arm 420, with battery enclosure member 424 forming a cover securely holding and covering a battery within housing 422. Battery enclosure member 424 may include any suitable materials as described herein. For example, battery enclosure member 424 may include a polymer substrate coated with one or more deposited layers, such as electrodeposited metal layers. Other portions of temple arm 420 may include any suitable materials, such as polymer, composite (e.g., carbon fiber), and/or other suitable materials providing sufficient structural rigidity and support for use in a temple worn by a user.

Battery enclosure member 424 may be configured to at least partially surround a battery having a non-rectangular and/or otherwise unconventional shape. For example, battery enclosure member 424 may include one or more curved surfaces configured to closely abut and securely hold a battery having curved and/or other non-rectilinear surface features. Exterior contours of battery enclosure member 424 may enable it to fit within and conform to corresponding features of temple arm 420. In various examples, battery enclosure member 424 may include mounting holes and/or other features that may be utilized for processing battery enclosure member 424 (e.g., etching, electroplating, etc.) and/or to fasten battery enclosure member 424 to housing 422 of temple arm 420.

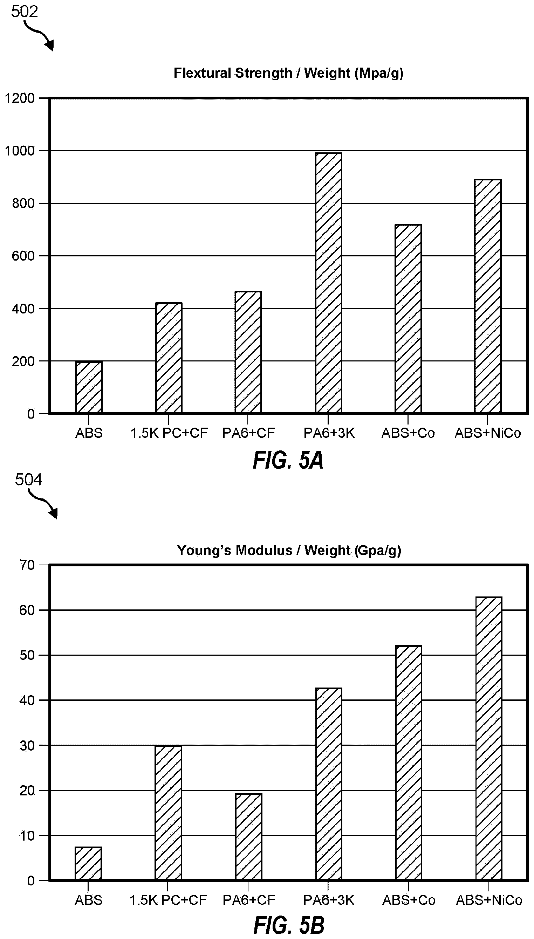

FIG. 5A is a graph 502 showing flexural strength values for various materials, in accordance with some embodiments. FIG. 5B is a graph 504 showing Young's modulus values for the materials shown in FIG. 5A. According to some embodiments, materials for use in battery enclosure members (e.g., battery enclosure member 100 in FIGS. 1A-2B and battery enclosure member 424 in FIGS. 4A and 4B) may include a combination of properties that provide components with sufficient strength and rigidity with reduced weight and size in comparison to conventional enclosure materials.

Graph 502 in FIG. 5B shows flexural strength values in megapascals per gram (MPa/g) for various materials and combinations of materials, include ABS (acrylonitrile butadiene styrene), 1.5K PC+CF (1.5K polycarbonate and carbon fiber), PA6+CF (polyamide 6 and carbon fiber, PA6+3K (polyamide 6 and 3K carbon fiber), ABS+Co (acrylonitrile butadiene styrene plated with cobalt), and ABS+NiCo (acrylonitrile butadiene styrene plated with Nickel-Cobalt). Graph 504 in FIG. 5B shows Young's Modulus values in gigapascals per gram (GPa/g) for the materials and combinations of materials shown in graph 502. As illustrated in FIGS. 5A and 5B, plated ABS materials, including the ABS+Co and ABS+NiCo materials, possess a superior combination of high flexural strength and high Young's modules. Accordingly, the plated ABS materials may provide a desirable combination strength and resistance to deformation in devices, such as the disclosed battery enclosures, in comparison to conventional enclosure materials.

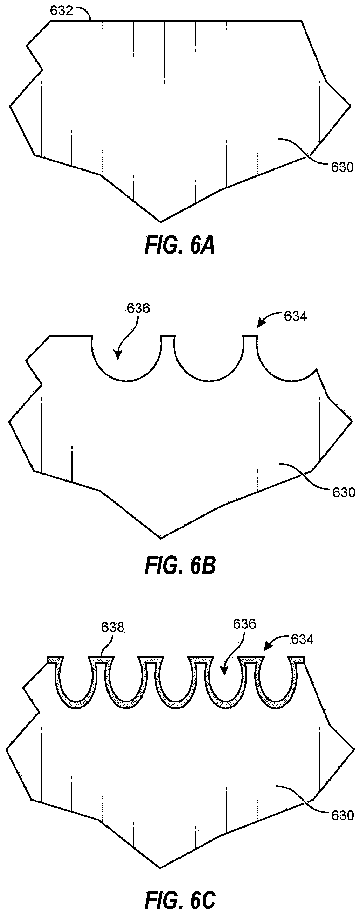

FIGS. 6A-8 illustrate an example process for etching and plating a substrate, such as a polymer base layer, to produce a plated member, such as a battery enclosure member as described herein. The polymer base layer of a plated member, such as a battery enclosure member, may be plated with a metal material or combination of materials on outer surfaces of the member such that all or substantially all surfaces are covered by metal plating layers. In some embodiments, selected surfaces and regions may be plated while other surfaces and regions are not plated.

FIG. 6A shows a cross-sectional view of a portion of a substrate member (e.g., substrate member 314 in FIG. 3). As shown, a portion of a polymer base layer 630 may include a substrate surface 632, which may be an exposed molded surface portion of the substrate member. Polymer base layer 630 may include any suitable material or combination of materials. For example, polymer base layer 630 may include a polymer material, such as ABS and/or any other suitable polymer material.

FIG. 6B illustrates a cross-sectional view of polymer base layer 630 following etching. According to some examples, substrate surface 632 shown in FIG. 6A may be etched to form to form recesses 636 in polymer base layer 630, with raised portions 634 between recess defining an outer surface boundary of polymer base layer 630. Etching to define recesses 636 in polymer base layer 630 may be performed in any suitable manner. For example, chemical etching may be used to remove portions of polymer base layer 630 to form recesses 636 at the etched regions. Chemical etching may be performed with or without masking. Any suitable etching agent may be utilized to perform chemical etching, including, for example, an acid solution (e.g., a sulfuric acid solution, sulfochromic solution, etc.). Any other suitable type of wet and/or dry etching may additionally or alternatively be utilized to define recesses 636 in polymer base layer 630. For example, photo etching, laser etching, gaseous etching, plasma etching, and/or any other suitable etching technique may be used. The uneven surface of polymer base layer 630, including recesses 636 and raised portions 634, may provide features on the surface for securing deposited metal layers to polymer base layer 630.

FIG. 6C illustrates a cross-sectional view of polymer base layer 630 following electroless nickel deposition. As shown, recesses 636 and raised portions 634 of polymer base layer 630 may be coated with an electroless deposited layer 638, such as a nickel layer. Electroless deposited layer 638 may be deposited, for example, by immersing polymer base layer 630 in a plating solution that includes a source of metallic ions, such as nickel ion, a reducing agent (e.g., formaldehyde, hydrazine, hydroxylamine, etc.). Deposited nickel layer 638 may be sufficiently thin that it coats surface portions of polymer base layer 630 while not completely filling or covering recesses 636, allowing for further deposition of materials, such as copper, within recesses 636.

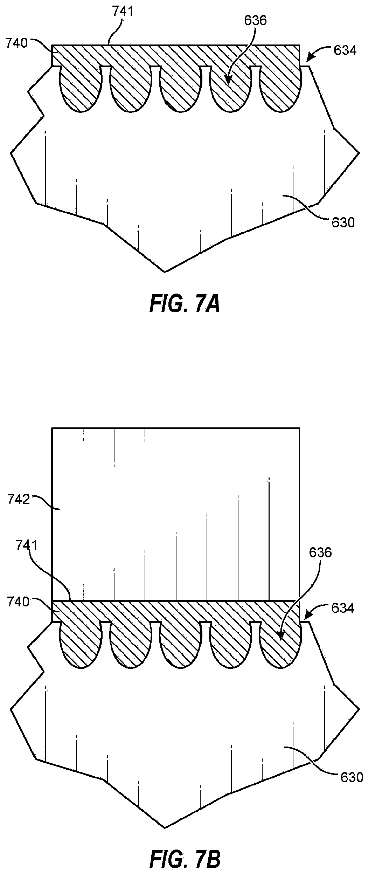

FIG. 7A illustrates a cross-sectional view of polymer base layer 630 following electrodeposition of a copper layer. A suitable metal, such as copper, may be deposited on surface portions of polymer base layer 630 through an electrodeposition process. According to at least one embodiment, polymer base layer 630 may be immersed in an electrolyte electrodeposition solution that includes copper ions (e.g., Cu²⁺). An anode, such as a copper anode, may be connected to a power supply and may be immersed in the solution. Electroless deposited layer 638 (see FIG. 6C) may be connected to the power supply and may act as a cathode (e.g., a terminal of the power supply may be electrically coupled to nickel coated polymer base layer 630 via a fixture 318 and racking members 316, as shown in FIG. 3). When charges are applied to the immersed anode and the cathode (i.e., electroless deposited layer 638) by the power supply, copper ions in the electrodeposition solution may migrate and deposit onto electroless deposited layer 638, forming a copper layer 740 over electroless deposited layer 638 (not shown in FIG. 7A) and polymer base layer 630.

In some embodiments, the electrodeposition process may be conducted for a period of time sufficient to coat recesses 636 and raised portions 634 of polymer base layer 630. In at least one example, following deposition, recesses 636 may be substantially or completely filled with deposited copper layer 740 such that copper layer 740 forms a layer over recesses 636 and raised portions 634 having an even or substantially even exposed surface 741, as shown in FIG. 7A. Portions of copper layer 740 abutting polymer base layer 630 may be secured within recesses 636 such that portions of copper layer 740 are intercalated with portions of recesses 636.

FIG. 7B illustrates a cross-sectional view of polymer base layer 630 and copper layer 740 following deposition of a nickel containing layer. In some examples, a metal layer 742, such as a layer including a cobalt alloy (e.g., cobalt-phosphorus alloy), nickel alloy (e.g., nickel-cobalt alloy), magnesium alloy, aluminum alloy, and/or any other suitable metal and/or alloy, may be plated on surface 741 of copper layer 740.

Metal layer 742 may be plated onto copper layer 740 in any suitable manner. In at least one embodiment, metal layer 742 may be plated onto copper layer 740 via electrodeposition. According to at least one embodiment, polymer base layer 630 plated with copper layer 740 may be immersed in an electrolyte electrodeposition solution that includes alloy-forming ions (e.g., cobalt ions, phosphorus ions, nickel ions). An anode may be connected to a power supply and may be immersed in the solution. Copper layer 740 may be connected to the power supply and may act as a cathode (e.g., a terminal of the power supply may be electrically coupled to copper layer 740 via a fixture 318 and racking members 316, as shown in FIG. 3). When charges are applied to the immersed anode and cathode (i.e., copper layer 740) by the power supply, ions may in the electrodeposition solution may migrate and deposit onto copper layer 740, forming metal layer 742 over copper layer 740 and polymer base layer 630.

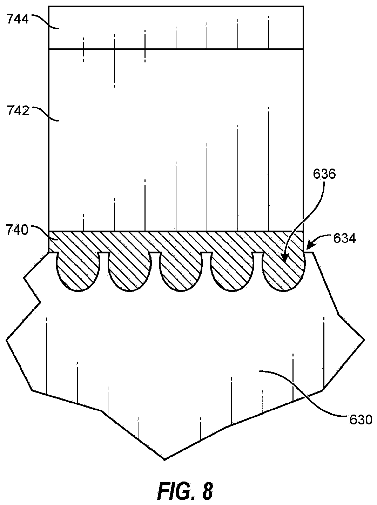

FIG. 8 illustrates a cross-sectional view of metal layer 742 following deposition of an outer layer. In at least example, a top-coat 744 may be deposited onto metal layer 742. top-coat 744 may be formed on metal layer 742 in any suitable manner and may include any suitable material and/or combination of materials. Top-coat 744 may provide functional and/or aesthetic characteristics to modify an exposed surface portion of the resulting plated member, such as a battery enclosure member, in a desired manner.

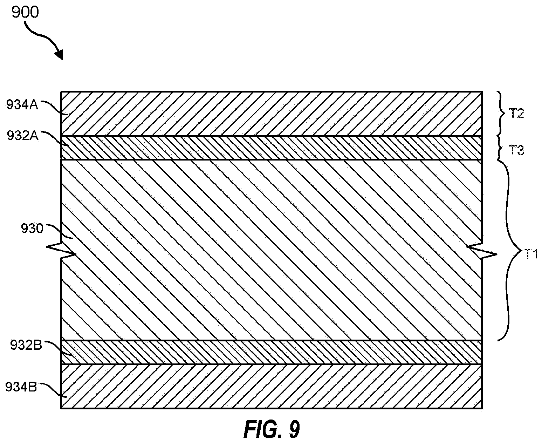

FIG. 9 illustrates a cross-sectional view of a portion of a plated member 900, such as a portion of a battery enclosure member. A base layer may be plated on any suitable portions and may include the plating on one or both sides of the layer. For example, as shown in FIG. 9, a polymer base layer 930 may include layers of deposited metal on both sides. In some examples, polymer base layer 930 may include first metal layers 932A and 932B (e.g., a copper layer) respectively deposited on top and bottom surfaces. Additionally, second metal layers 934A and 934B (e.g., alloy layer, such as cobalt-phosphorus alloy, nickel-cobalt alloy, etc.) may be respectively plated on first metal layers 932A and 932B.

Polymer base layer 930, first metal layers 932A and 932B, and second metal layers 934A and 934B may have any suitable thicknesses. The layers, materials, and thicknesses of plated member 900 may be selected to provide a selected combination of strength and weight. For example, polymer base layer 930 may have a thickness T1 of from approximately 100 µm to approximately 500 µm (e.g., approximately 100 µm, approximately 110 µm, approximately 120 µm, approximately 130 µm, approximately 140 µm, approximately 150 µm, approximately 160 µm, approximately 170 µm, approximately 180 µm, approximately 190 µm, approximately 200 µm, approximately 210 µm, approximately 220 µm, approximately 230 µm, approximately 240 µm, approximately 250 µm, approximately 260 µm, approximately 270 µm, approximately 280 µm, approximately 290 µm, approximately 300 µm, approximately 310 µm, approximately 320 µm, approximately 330 µm, approximately 340 µm, approximately 350 µm, approximately 360 µm, approximately 370 µm, approximately 380 µm, approximately 390 µm, approximately 400 µm, approximately 410 µm, approximately 420 µm, approximately 430 µm, approximately 440 µm, approximately 450 µm, approximately 460 µm, approximately 470 µm, approximately 480 µm, approximately 490 µm, approximately 500 µm).

A first and second metal layer (e.g., first metal layer 932A and second metal layer 934A) may have a combined thickness of from approximately 0.3 µm to approximately 500 µm. In some examples, first metal layers 932A and 932B may each have a thickness T2 of from approximately 0.3 µm to approximately 30 µm (e.g., approximately 0.3 µm, approximately 0.4 µm, approximately 0.5 µm, approximately 0.6 µm, approximately 0.7 µm, approximately 0.8 µm, approximately 0.9 µm, approximately 1 µm, approximately 2 µm, approximately 3 µm, approximately 5 µm, approximately 6 µm, approximately 7 µm, approximately 8 µm, approximately 9 µm, approximately 10 µm, approximately 11 µm, approximately 12 µm, approximately 13 µm, approximately 14 µm, approximately 15 µm, approximately 16 µm, approximately 17 µm, approximately 18 µm, approximately 19 µm, approximately 20 µm, approximately 21 µm, approximately 22 µm, approximately 23 µm, approximately 24 µm, approximately 25 µm, approximately 26 µm, approximately 27 µm, approximately 28 µm, approximately 29 µm, approximately 30 µm).

Second metal layers 934A and 934B may each have a thickness T3 of from approximately 1 µm to approximately 500 µm (e.g., approximately approximately 1 µm, approximately 2 µm, approximately 3 µm, approximately 5 µm, approximately 6 µm, approximately 7 µm, approximately 8 µm, approximately 9 µm, approximately 10 µm, approximately 15 µm, approximately 20 µm, approximately 25 µm, approximately 30 µm, approximately 35 µm, approximately 40 µm, approximately 45 µm, approximately 50 µm, approximately 60 µm, approximately 70 µm, approximately 80 µm, approximately 90 µm, approximately 100 µm, approximately 110 µm, approximately 120 µm, approximately 130 µm, approximately 140 µm, approximately 150 µm, approximately 160 µm, approximately 170 µm, approximately 180 µm, approximately 190 µm, approximately 200 µm, approximately 210 µm, approximately 220 µm, approximately 230 µm, approximately 240 µm, approximately 250 µm, approximately 260 µm, approximately 270 µm, approximately 280 µm, approximately 290 µm, approximately 300 µm, approximately 310 µm, approximately 320 µm, approximately 330 µm, approximately 340 µm, approximately 350 µm, approximately 360 µm, approximately 370 µm, approximately 380 µm, approximately 390 µm, approximately 400 µm, approximately 410 µm, approximately 420 µm, approximately 430 µm, approximately 440 µm, approximately 450 µm, approximately 460 µm, approximately 470 µm, approximately 480 µm, approximately 490 µm, approximately 500 µm).

In some embodiments, a single layer of material (e.g., copper) may be disposed on one or both sides of polymer base layer 930. Such a layer may have a thickness, for example, of from approximately 0.3 µm to approximately 500 µm (e.g., approximately 0.3 µm, approximately 0.4 µm, approximately 0.5 µm, approximately 0.6 µm, approximately 0.7 µm, approximately 0.8 µm, approximately 0.9 µm, approximately 1 µm, approximately 2 µm, approximately 3 µm, approximately 5 µm, approximately 6 µm, approximately 7 µm, approximately 8 µm, approximately 9 µm, approximately 10 µm, approximately 15 µm, approximately 20 µm, approximately 25 µm, approximately 30 µm, approximately 35 µm, approximately 40 µm, approximately 45 µm, approximately 50 µm, approximately 60 µm, approximately 70 µm, approximately 80 µm, approximately 90 µm, approximately 100 µm, approximately 110 µm, approximately 120 µm, approximately 130 µm, approximately 140 µm, approximately 150 µm, approximately 160 µm, approximately 170 µm, approximately 180 µm, approximately 190 µm, approximately 200 µm, approximately 210 µm, approximately 220 µm, approximately 230 µm, approximately 240 µm, approximately 250 µm, approximately 260 µm, approximately 270 µm, approximately 280 µm, approximately 290 µm, approximately 300 µm, approximately 310 µm, approximately 320 µm, approximately 330 µm, approximately 340 µm, approximately 350 µm, approximately 360 µm, approximately 370 µm, approximately 380 µm, approximately 390 µm, approximately 400 µm, approximately 410 µm, approximately 420 µm, approximately 430 µm, approximately 440 µm, approximately 450 µm, approximately 460 µm, approximately 470 µm, approximately 480 µm, approximately 490 µm, approximately 500 µm)

FIG. 10 is a flow diagram of an exemplary method 1000 for producing a plated member, such as a battery enclosure member, according to some embodiments. As illustrated in FIG. 10, at step 1010, a polymer base layer may be provided. The polymer base layer may be dimensioned to abut a battery in an electronic device. In some examples, the polymer base layer may be molded such that the surface of the polymer base layer includes one or more curved portions (see, e.g., 1A-2A).

At step 1020 in FIG. 10, a surface of the polymer base layer may be etched. For example, the polymer base layer may be etched using a suitable wet and/or dry etching technique to produce uneven surface features, such as recesses on exposed surface portions of the polymer base layer (see, e.g., FIGS. 6A-6B).
At step 1030 in FIG. 10, a metal coating may be deposited over at least a portion of the surface of the polymer base layer. For example, one or more metal layers may be deposited over the etched surface portions of the polymer base layer (see, e.g., FIGS. 6C-9). In some examples, depositing the metal coating may include 1) depositing a first metal layer over the etched surface of the polymer base layer and 2) depositing a second metal layer over the first metal layer, the second metal layer including an alloy (see, e.g., FIGS. 7A-9). In some, examples, the second metal layer may include at least one of a cobalt-phosphorous alloy or a nickel-cobalt alloy.

As described herein, the disclosed battery assemblies advantageously include enclosures formed of molded polymer material plated with one or more thin metal layers. The combination of polymer and metal materials may provide strong enclosures that are relatively lightweight and thin while also having a high flexural modulus and Young's modulus. Additionally, the described enclosures may provide resistance to fire while also presenting a visually appealing metallic surface finish. The combination of polymer and metal materials may be much lower in cost than other strong, lightweight materials, such as carbon fiber layers. The battery enclosures may be molded to into shapes that are substantially more complex than conventional rectangular battery enclosures. Accordingly, such enclosures may have various curved surfaces with non-rectangular surface profiles to accommodate batteries for devices having reduced device profiles and unique contours.

### Example Embodiments

Example 1: A battery assembly including a battery enclosure member dimensioned to secure a battery in an electronic device, the battery enclosure member including 1) a polymer base layer and 2) a metal coating covering at least a portion of a surface of the polymer base layer.

Example 2: The battery assembly of Example 1, where the surface of the polymer base layer includes an etched surface.

Example 3: The battery assembly of any of Examples 1 and 2, where the metal coating includes at least two metal layers.

Example 4: The battery assembly of Example 3, where a first metal layer of the at least two metal layers includes at least one of copper or nickel.

Example 5: The battery assembly of Example 4, where a second metal layer of the at least two metal layers includes an alloy.

Example 6: The battery assembly of Example 5, where the second metal layer includes at least one of a cobalt-phosphorous alloy or a nickel-cobalt alloy.

Example 7: The battery assembly of any of Examples 1-6, where the polymer base layer has a thickness of from approximately 100 µm to approximately 500 µm.

Example 8: The battery assembly of any of Examples 1-7, where the metal coating has a thickness of from approximately 2 µm to approximately 100 µm.

Example 9: The battery assembly of any of Examples 1-8, where the polymer base layer includes a polymer formed from at least one of acrylonitrile, butadiene, or styrene.

Example 10: The battery assembly of Example 9, where the polymer base layer further includes at least one of polycarbonate and glass fiber.

Example 11: The battery assembly of any of Examples 1-10, where the battery enclosure member defines a recess that is dimensioned to at least partially surround the battery.

Example 12: The battery assembly of any of Examples 1-11, where 1) the metal coating is a first metal coating and the surface is a first surface of the polymer base layer and 2) a second metal coating covers at least a portion of a second surface of the polymer base layer that is disposed opposite the first surface.

Example 13: The battery assembly of any of Examples 1-12, further including a battery positioned abutting the battery enclosure member.

Example 14: The battery assembly of Example 13, where the battery is at least partially surrounded by the battery enclosure member.

Example 15: The battery assembly of any of Examples 1-14, where the surface of the polymer base layer includes one or more curved portions.

Example 16: An electronic device including a battery and a battery enclosure member securing the battery, the battery enclosure member including 1) a polymer base layer and 2) a metal coating covering at least a portion of a surface of the polymer base layer.

Example 17: A method including 1) providing a polymer base layer dimensioned to abut a battery in an electronic device, 2) etching a surface of a polymer base layer, and 3) depositing a metal coating over at least a portion of the surface of the polymer base layer.

Example 18: The method of any of Examples 17, further including molding the polymer base layer such that the surface of the polymer base layer includes one or more curved portions.

Example 19: The method of any of Examples 17 and 18, where depositing the metal coating includes 1) depositing a first metal layer over the etched surface of the polymer base layer and 2) depositing a second metal layer over the first metal layer, the second metal layer including an alloy.

Example 20: The method of Example 19, where the second metal layer includes at least one of a cobalt-phosphorous alloy or a nickel-cobalt alloy.

Embodiments of the present disclosure may include or be implemented in -conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

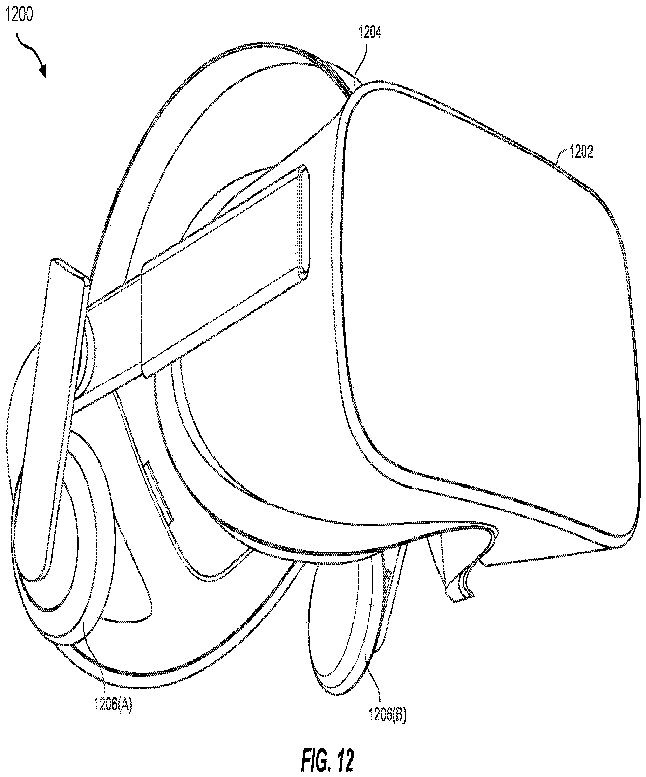

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 1100 in FIG. 11) or that visually immerses a user in an artificial reality (such as, e.g., virtual-reality system 1200 in FIG. 12). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 11, augmented-reality system 1100 may include an eyewear device 1102 with a frame 1110 configured to hold a left display device 1115(A) and a right display device 1115(B) in front of a user's eyes. Display devices 1115(A) and 1115(B) may act together or independently to present an image or series of images to a user. While augmented-reality system 1100 includes two displays, embodiments of this disclosure may be implemented in augmented-reality systems with a single NED or more than two NEDs.

In some embodiments, augmented-reality system 1100 may include one or more sensors, such as sensor 1140. Sensor 1140 may generate measurement signals in response to motion of augmented-reality system 1100 and may be located on substantially any portion of frame 1110. Sensor 1140 may represent one or more of a variety of different sensing mechanisms, such as a position sensor, an inertial measurement unit (IMU), a depth camera assembly, a structured light emitter and/or detector, or any combination thereof. In some embodiments, augmented-reality system 1100 may or may not include sensor 1140 or may include more than one sensor. In embodiments in which sensor 1140 includes an IMU, the IMU may generate calibration data based on measurement signals from sensor 1140. Examples of sensor 1140 may include, without limitation, accelerometers, gyroscopes, magnetometers, other suitable types of sensors that detect motion, sensors used for error correction of the IMU, or some combination thereof.

In some examples, augmented-reality system 1100 may also include a microphone array with a plurality of acoustic transducers 1120(A)-1120(J), referred to collectively as acoustic transducers 1120. Acoustic transducers 1120 may represent transducers that detect air pressure variations induced by sound waves. Each acoustic transducer 1120 may be configured to detect sound and convert the detected sound into an electronic format (e.g., an analog or digital format). The microphone array in FIG. 11 may include, for example, ten acoustic transducers: 1120(A) and 1120(B), which may be designed to be placed inside a corresponding ear of the user, acoustic transducers 1120(C), 1120(D), 1120(E), 1120(F), 1120(G), and 1120(H), which may be positioned at various locations on frame 1110, and/or acoustic transducers 1120(I) and 1120(J), which may be positioned on a corresponding neckband 1105.

In some embodiments, one or more of acoustic transducers 1120(A)-(J) may be used as output transducers (e.g., speakers). For example, acoustic transducers 1120(A) and/or 1120(B) may be earbuds or any other suitable type of headphone or speaker.

The configuration of acoustic transducers 1120 of the microphone array may vary. While augmented-reality system 1100 is shown in FIG. 11 as having ten acoustic transducers 1120, the number of acoustic transducers 1120 may be greater or less than ten. In some embodiments, using higher numbers of acoustic transducers 1120 may increase the amount of audio information collected and/or the sensitivity and accuracy of the audio information. In contrast, using a lower number of acoustic transducers 1120 may decrease the computing power required by an associated controller 1150 to process the collected audio information. In addition, the position of each acoustic transducer 1120 of the microphone array may vary. For example, the position of an acoustic transducer 1120 may include a defined position on the user, a defined coordinate on frame 1110, an orientation associated with each acoustic transducer 1120, or some combination thereof.

Acoustic transducers 1120(A) and 1120(B) may be positioned on different parts of the user's ear, such as behind the pinna, behind the tragus, and/or within the auricle or fossa. Or, there may be additional acoustic transducers 1120 on or surrounding the ear in addition to acoustic transducers 1120 inside the ear canal. Having an acoustic transducer 1120 positioned next to an ear canal of a user may enable the microphone array to collect information on how sounds arrive at the ear canal. By positioning at least two of acoustic transducers 1120 on either side of a user's head (e.g., as binaural microphones), augmented-reality device 1100 may simulate binaural hearing and capture a 3D stereo sound field around about a user's head. In some embodiments, acoustic transducers 1120(A) and 1120(B) may be connected to augmented-reality system 1100 via a wired connection 1130, and in other embodiments acoustic transducers 1120(A) and 1120(B) may be connected to augmented-reality system 1100 via a wireless connection (e.g., a BLUETOOTH connection). In still other embodiments, acoustic transducers 1120(A) and 1120(B) may not be used at all in conjunction with augmented-reality system 1100.

Acoustic transducers 1120 on frame 1110 may be positioned in a variety of different ways, including along the length of the temples, across the bridge, above or below display devices 1115(A) and 1115(B), or some combination thereof. Acoustic transducers 1120 may also be oriented such that the microphone array is able to detect sounds in a wide range of directions surrounding the user wearing the augmented-reality system 1100. In some embodiments, an optimization process may be performed during manufacturing of augmented-reality system 1100 to determine relative positioning of each acoustic transducer 1120 in the microphone array.

In some examples, augmented-reality system 1100 may include or be connected to an external device (e.g., a paired device), such as neckband 1105. Neckband 1105 generally represents any type or form of paired device. Thus, the following discussion of neckband 1105 may also apply to various other paired devices, such as charging cases, smart watches, smart phones, wrist bands, other wearable devices, hand-held controllers, tablet computers, laptop computers, other external compute devices, etc.

As shown, neckband 1105 may be coupled to eyewear device 1102 via one or more connectors. The connectors may be wired or wireless and may include electrical and/or non-electrical (e.g., structural) components. In some cases, eyewear device 1102 and neckband 1105 may operate independently without any wired or wireless connection between them. While FIG. 11 illustrates the components of eyewear device 1102 and neckband 1105 in example locations on eyewear device 1102 and neckband 1105, the components may be located elsewhere and/or distributed differently on eyewear device 1102 and/or neckband 1105. In some embodiments, the components of eyewear device 1102 and neckband 1105 may be located on one or more additional peripheral devices paired with eyewear device 1102, neckband 1105, or some combination thereof.

Pairing external devices, such as neckband 1105, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 1100 may be provided by a paired device or shared between a paired device and an eyewear device, thus reducing the weight, heat profile, and form factor of the eyewear device overall while still retaining desired functionality. For example, neckband 1105 may allow components that would otherwise be included on an eyewear device to be included in neckband 1105 since users may tolerate a heavier weight load on their shoulders than they would tolerate on their heads. Neckband 1105 may also have a larger surface area over which to diffuse and disperse heat to the ambient environment. Thus, neckband 1105 may allow for greater battery and computation capacity than might otherwise have been possible on a stand-alone eyewear device. Since weight carried in neckband 1105 may be less invasive to a user than weight carried in eyewear device 1102, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 1105 may be communicatively coupled with eyewear device 1102 and/or to other devices. These other devices may provide certain functions (e.g., tracking, localizing, depth mapping, processing, storage, etc.) to augmented-reality system 1100. In the embodiment of FIG. 11, neckband 1105 may include two acoustic transducers (e.g., 1120(I) and 1120(J)) that are part of the microphone array (or potentially form their own microphone subarray). Neckband 1105 may also include a controller 1125 and a power source 1135.

Acoustic transducers 1120(I) and 1120(J) of neckband 1105 may be configured to detect sound and convert the detected sound into an electronic format (analog or digital). In the embodiment of FIG. 11, acoustic transducers 1120(I) and 1120(J) may be positioned on neckband 1105, thereby increasing the distance between the neckband acoustic transducers 1120(I) and 1120(J) and other acoustic transducers 1120 positioned on eyewear device 1102. In some cases, increasing the distance between acoustic transducers 1120 of the microphone array may improve the accuracy of beamforming performed via the microphone array. For example, if a sound is detected by acoustic transducers 1120(C) and 1120(D) and the distance between acoustic transducers 1120(C) and 1120(D) is greater than, e.g., the distance between acoustic transducers 1120(D) and 1120(E), the determined source location of the detected sound may be more accurate than if the sound had been detected by acoustic transducers 1120(D) and 1120(E).

Controller 1125 of neckband 1105 may process information generated by the sensors on neckband 1105 and/or augmented-reality system 1100. For example, controller 1125 may process information from the microphone array that describes sounds detected by the microphone array. For each detected sound, controller 1125 may perform a direction-of-arrival (DOA) estimation to estimate a direction from which the detected sound arrived at the microphone array. As the microphone array detects sounds, controller 1125 may populate an audio data set with the information. In embodiments in which augmented-reality system 1100 includes an inertial measurement unit, controller 1125 may compute all inertial and spatial calculations from the IMU located on eyewear device 1102. A connector may convey information between augmented-reality system 1100 and neckband 1105 and between augmented-reality system 1100 and controller 1125. The information may be in the form of optical data, electrical data, wireless data, or any other transmittable data form. Moving the processing of information generated by augmented-reality system 1100 to neckband 1105 may reduce weight and heat in eyewear device 1102, making it more comfortable to the user.

Power source 1135 in neckband 1105 may provide power to eyewear device 1102 and/or to neckband 1105. Power source 1135 may include, without limitation, lithium ion batteries, lithium-polymer batteries, primary lithium batteries, alkaline batteries, or any other form of power storage. In some cases, power source 1135 may be a wired power source. Including power source 1135 on neckband 1105 instead of on eyewear device 1102 may help better distribute the weight and heat generated by power source 1135.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 1200 in FIG. 12, that mostly or completely covers a user's field of view. Virtual-reality system 1200 may include a front rigid body 1202 and a band 1204 shaped to fit around a user's head. Virtual-reality system 1200 may also include output audio transducers 1206(A) and 1206(B). Furthermore, while not shown in FIG. 12, front rigid body 1202 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 1100 and/or virtual-reality system 1200 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 1100 and/or virtual-reality system 1200 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 1100 and/or virtual-reality system 1200 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. For example, one or more of the modules recited herein may receive biopotential signals to be transformed, transform the biopotential signals into data indicating a user's vital characteristic(s), output a result of the transformation, use the result of the transformation to provide information to the user, and store the result of the transformation. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some embodiments, the term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present disclosure as defined in the appended claims. The embodiments disclosed herein should be considered in all respects illustrative and not restrictive. Reference should be made to the appended claims in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

### SYSTEMS AND METHODS FOR CHARGING AN ELECTRONIC DEVICE

The present disclosure is generally directed to improved techniques for charging the battery of an electronic device (such as a smart device, smart glasses, head-mounted display, etc.) from an additional battery source. In one example, an additional battery source (such as a charging case for the electronic device) may include an adjustable boost circuit that boosts the voltage level of the additional battery source to the exact voltage needed to efficiently charge the battery of the electronic device. Specifically, the disclosed system may utilize a communication method that communicates the voltage level of the battery in the electronic device to the charging device, which can then in turn determine the appropriate voltage level to use to most efficiently charge the battery of the electronic device. By doing so, the disclosed systems may improve the charging efficiency of the electronic device and reduce battery capacity requirements.

In one example, a method for charging an electronic device may include receiving battery status information from an electronic device (via, e.g., the device's firmware) that identifies a voltage level of a battery of the electronic device. The method may also include determining a charging mode for charging the electronic device from an additional battery source (e.g., case battery) based on the battery status information. Examples of such charging modes include a boost mode that may boost the voltage level of the additional battery source before charging and a bypass mode that may not boost the voltage level of the additional battery source before charging. The method may then include charging, using the determined charging mode, the electronic device from the additional battery source.

In some embodiments, voltage regulators associated with the additional battery source and/or the electronic device may be selectively activated to run in the bypass mode and/or boost mode to improve charging efficiency. In some examples, charging chipsets may be used to enable the selective activation of the bypass and/or boost mode. By doing so, the disclosed method may provide dynamic feedback between the additional battery source and the electronic device, enabling the control and/or regulation of headroom across each device. In some embodiments, the firmware control methods (e.g., a firmware control loop) may be used to monitor the voltage values of the electronic device. In addition, these firmware control methods may include monitoring the battery voltage values of the electronic device over time and/or at a fixed and/or variable interval.

### Example Embodiments

Example 1: A method for charging an electronic device including receiving battery status information from the electronic device, the battery status information identifying a voltage level of a battery of the electronic device, determining, based on the battery status information, a charging mode for charging the electronic device from an additional battery source, the charging mode including at least one of a boost mode that boosts the voltage level of the additional battery source before charging, or a bypass mode that does not boost the voltage level of the additional battery source before charging, and charging, using the determined charging mode, the electronic device from the additional battery source.

### SYSTEMS AND METHODS FOR IMPROVED BATTERY CHARGING

The present disclosure is generally directed to improved techniques for battery charging that utilize a combination of hardware and firmware methods to protect the battery from charging current exposure. In one example, the disclosed system may include a hardware overprotection circuit (e.g., fuse, circuit breaker, power switch, diodes, relay, etc.) that reduces the safety risks associated with the battery (e.g., temperature exposure, thermal exposure, charging current exposure, etc.). As described herein, the disclosed techniques may both improve the charging efficiency of the battery and protect the battery against vulnerabilities.

In one example, a method for improved battery charging may include receiving battery status information from an overcurrent protection circuit that identifies a charging current level of the battery. The method may also include determining a charging protocol for charging the battery based on the battery status. In some embodiments, the charging protocol may include identifying a temperature level of the battery via a temperature sensor integrated within the overcurrent protection circuit. In addition, the charging protocol may compare the identified charging current level to a charging current threshold when the identified temperature level reaches a temperature threshold. The charging protocol may also include activating the overcurrent protection circuit to disable charging of the battery when the identified charging current level exceeds the charging current threshold while the identified temperature level is below the temperature threshold. For example, the charging protocol may limit and/ or disable the charging of the battery in response to the identified temperate reaching temperature values including <0°C, and 0°C to 10°C. In some instances, charging may remain disabled until the identified temperature level returns to a value above the temperature threshold.

In some embodiments, the systems described herein may include additional components integrated within the overcurrent protection circuit to protect the battery. For example, the overcurrent protection circuit may include, without limitation, current sensors, amplifiers, temperature sensors, comparison circuits, logic units, programmable logic devices, etc. In some embodiments, these additional components may be fully integrated within an integrated circuit designed to manage the overcurrent protection circuit.

### Example Embodiments

Example 1: A method for charging a battery, the method including receiving battery status information from a circuit, the battery status information identifying a charging current level of the battery, determining, based on the battery status information, a charging protocol for charging the battery, the charging protocol including identifying, via a sensor, a temperature level of the battery, comparing the identified charging current level to a charging current threshold that is associated with a temperature threshold, and activating the circuit to disable charging the battery when the charging current level exceeds the charging current threshold while the identified temperature level is below the temperature threshold.

### SYSTEMS AND METHODS FOR IMPROVED BATTERY DERATING

The present disclosure is generally directed to improved techniques for battery derating, including predicting when a battery has been exposed to high temperature via the utilization of firmware systems in combination with hardware methods. In one example, methods may include a tiered system of limiting the charge and/or derating the capacity of a battery. In another example, methods may include using a gas gauge to generate a heatmap indicating a duration the battery has spent at different exposure level values. By doing so, the disclosed systems may include may increase the overall life of the battery and/or maximize battery capacity by preventing future exposures.

In one example, a method for improved battery derating may include dynamically managing battery capacity based on exposure to high temperatures and/or voltages. The method may also include continuously monitoring exposure level values (such as temperature and/or voltage) of a battery via a gas gauge that generates a heatmap indicating a duration the battery spent at different exposure level values. In some embodiments, utilizing the heat map may include calculating a risk value through a formula (such as a weighted sum formula) applied to the exposure level values in the heat map. In other embodiments, the methods may include comparing the calculated risk value to predetermined thresholds to determine the exposure level values of the battery. In further embodiments, the methods may include firmware systems configured to access the heatmap via an integrated circuit to enable dynamic communication between the gas gauge and the firmware systems. Additionally, the methods may include implementing a tiered system of battery capacity limitations based on the determined exposure level values.

In some embodiments, the predetermined thresholds may correspond to different exposure levels of the battery. In other embodiments, the tiered system may include methods for limiting the charge and/or derating the capacity of a battery, such as a first threshold triggering a warning, a second threshold triggering a first limitation on battery capacity, and a third threshold triggering a second limitation.

### Example Embodiments

Example 1: A method including continuously monitoring exposure level values of a battery via a gas gauge that generates a heatmap indicating a duration spent at different exposure level values, calculating a risk value based on the exposure level values in the heatmap, comparing the calculated risk value to predetermined thresholds to determine exposure level values of the battery, and implementing a tiered system of battery capacity limitations based on the determined exposure level values.

### SYSTEMS AND METHODS FOR IMPROVED BATTERY CASES

The present disclosure is generally directed to improved techniques for battery packaging that utilize a battery cell design with shared packaging materials (e.g., pouch cell design, hard case cell design, etc.) that result in more efficient packing for battery cells with two or more battery cell bodies connected in series and/or parallel. In one example, the shared packaging materials may include a bottom pouch layer shared between two or more battery cell bodies. The shared bottom pouch layer may form an enclosure to facilitate the connection of battery cells side by side in a plane. In further examples, the battery cell design may include a side seal region that is flexible and/or is tunable in length. The flexible design of the side seal region may enable a flexible form factor for the battery cell design, including cuboidal, curved, shaped, chamfered, etc. shapes. In other examples, the battery cell design may include a flexible cell size and/or cell dimension, where the battery cell bodies may be the same size and/or distinct size (e.g., length, width, and/or thickness of the cell bodies). In further examples, the battery cell design may include terminal tabs that may be on the same side of the battery cell and/or on the opposite side of the battery cell. Additionally, the terminal tabs may be connected in series or parallel on battery cells that share a terrace, including battery cells that may not share a terrace.

In some embodiments, the shared packing materials may further include a middle layer shared between two or more battery cells, where the battery cells may be stacked in a thickness direction (e.g., stacked on top and bottom). In further embodiments, the shared middle layer may be a thin layer of polymeric material (such as polypropylene) and/or multiple layers of laminates materials (such as aluminum pouch film). Additionally, the shared middle layer may include a shared side seal and a top seal that may reduce inactive weight and volume in the battery pack.

As described herein, the disclosed designs for the battery cell design may include fewer inactive components and a reduced material weight and/or volume ratio, which may increase both the volumetric and gravimetric energy density of the battery cells. Further, the battery cell design may be assembled via methods including heat sealing, laser welding, mechanical cramping etc.

### Example Embodiments

Example 1: Shared packaging material for battery with at least two battery cell bodies connected in either in series or parallel, the shared packaging including, a bottom pouch layer shared between the at least two battery cell bodies placed next to each other side by side, the shared bottom pouch layer comprising a flexible side seal region, and a middle layer shared between the at least two battery cell bodies stacked up in thickness direction, the shared middle layer including a thin layer of polymeric material.

Example 2: The shared packaging material of example 1, where the flexible side seal region between the at least two battery cells is tunable in length.

## Claims

1. A battery assembly comprising:
a battery enclosure member dimensioned to secure a battery in an electronic device, the battery enclosure member comprising:
a polymer base layer; and
a metal coating covering at least a portion of a surface of the polymer base layer.

2. The battery assembly of claim 1, wherein the surface of the polymer base layer comprises an etched surface.

3. The battery assembly of claim 1 or claim 2, wherein the metal coating comprises at least two metal layers.

4. The battery assembly of claim 3, wherein a first metal layer of the at least two metal layers comprises at least one of copper or nickel.

5. The battery assembly of claim 4, wherein a second metal layer of the at least two metal layers comprises an alloy;
optionally, wherein the second metal layer comprises at least one of a cobalt-phosphorous alloy or a nickel-cobalt alloy.

6. The battery assembly of any preceding claim, and one or more of the following:
(i) wherein the polymer base layer has a thickness of from approximately 100 µm to approximately 500 µm;
(ii) wherein the metal coating has a thickness of from approximately 2 µm to approximately 100 µm.

7. The battery assembly of any preceding claim, wherein the polymer base layer comprises a polymer formed from at least one of acrylonitrile, butadiene, or styrene;
optionally, wherein the polymer base layer further comprises at least one of polycarbonate and glass fiber.

8. The battery assembly of any preceding claim, wherein the battery enclosure member defines a recess that is dimensioned to at least partially surround the battery.

9. The battery assembly of any preceding claim, wherein:
the metal coating is a first metal coating and the surface is a first surface of the polymer base layer; and
a second metal coating covers at least a portion of a second surface of the polymer base layer that is disposed opposite the first surface.

10. The battery assembly of any preceding claim, further comprising a battery positioned abutting the battery enclosure member;
optionally, wherein the battery is at least partially surrounded by the battery enclosure member.

11. The battery assembly of any preceding claim, wherein the surface of the polymer base layer comprises one or more curved portions.

12. An electronic device comprising:
a battery; and
a battery enclosure member securing the battery, the battery enclosure member comprising:
a polymer base layer; and
a metal coating covering at least a portion of a surface of the polymer base layer.

13. A method comprising:
providing a polymer base layer dimensioned to abut a battery in an electronic device;
etching a surface of a polymer base layer; and
depositing a metal coating over at least a portion of the surface of the polymer base layer.

14. The method of claim 13, further comprising molding the polymer base layer such that the surface of the polymer base layer comprises one or more curved portions.

15. The method of claim 13 or claim 14, wherein depositing the metal coating comprises:
depositing a first metal layer over the etched surface of the polymer base layer; and
depositing a second metal layer over the first metal layer, the second metal layer comprising an alloy;
optionally, wherein the second metal layer comprises at least one of a cobalt-phosphorous alloy or a nickel-cobalt alloy.
